# EUROPÄISCHE PATENTSCHRIFT

(11) **EP 1 936 297 B1**
(45) Veröffentlichungstag und Bekanntmachung des Hinweises auf die Patenterteilung: **11.05.2011**
(21) Anmeldenummer: 07122101.4
(22) Anmeldetag: 03.12.2007
(51) Int. Cl.: F24H 9/12, F28D 20/00

(54) **Einsatz für einen Warmwasser-Schichtspeicher**
Cartridge for a multi-layered hot water storage tank
Cartouche pour un accumulateur stratifié

(30) Priorität: 09.12.2006 DE 202006018615 U
(43) Veröffentlichungstag der Anmeldung: 25.06.2008
(73) Patentinhaber: Kraus, Martin, 85131 Pollenfeld (DE)
(72) Erfinder: Kraus, Martin, 85131 Pollenfeld (DE)
(74) Vertreter: Schlief, Thomas P.

(56) Entgegenhaltungen:
- EP-A- 1 489 374
- WO-A-00/29789
- DE-A1- 3 819 317
- DE-A1- 10 123 305
- DE-A1- 10 126 916
- DE-U1- 9 001 675
- DE-U1- 29 714 361

## Beschreibung

Die Erfindung betrifft einen Einsatz für einen Warmwasser-Schichtspeicher, mit einer im wesentlichen zylinderförmigen Wandung, mit wenigstens einer stirnseitigen Abdeckung, mit einer Durchbrechung innerhalb der Wandung, wobei die Durchbrechung mit wenigstens einem Einlauf- bzw. Ablaufrohr verbunden ist.

Warmwasser-Schichtspeicher sind vielfältig bekannt. Sie dienen der Zwischenspeicherung von erwärmtem Brauch- oder Nutzwasser, wobei die Wärmeenergie auf möglichst hohem Niveau erhalten werden soll, um diese effizient nutzen zu können. Beim Beladen und Entleeren des Speichers ist für die Maximierung der Energieeffizienz eine Durchmischung heißerer und kälterer Wasserschichten soweit wie möglich zu verhindern. Im Stand der Technik sind hierzu ein Reihe von Einsätzen bekannt, die eine Strömungsberuhigung im Bereich der Zu- und Ablaufrohre des Warmwasser-Schichtspeichers bewirken sollen.

Ein Speicher mit einem gattungsgemäßen Einsatz ist beispielsweise in der DE 44 17 138 A1 offenbart, bei dem die Vorlaufinnenkammer mit der Vorlaufaußenkammer sowie die Rücklaufinnenkammer mit der Rücklaufaußenkammer über vertikale Anordnungen von Öffnungen miteinander verbunden sind. Hierdurch sollen die Strömungen in den vertikal verlaufenden Kammern im wesentlichen vertikal verlaufen, so dass die vertikale und temperaturabhängige Schichtung des Wassers im Tankvolumen außerhalb der Kammern bei allen Betriebsbedingungen erhalten bleibt. Nachteilig bei dieser Konstruktion ist jedoch der vergleichsweise komplizierte Aufbau der vier Kammern sowie der hohe Materialaufwand. Auch ist die Wirksamkeit dieses Speichers verbesserungswürdig.

Weiterhin ist aus der DE 198 16 384 ein Warmwasser-Schichtspeicher bekannt, in den eine in Aufsicht spiralförmige, vertikal angeordnete Einlaufkammer eingesetzt ist. Diese zeichnet sich dadurch aus, dass das einlaufende Wasser um mehr als 180° umgelenkt wird und damit genügend Zeit hat, entsprechend seiner Temperatur in die entsprechende Höhe zu gelangen, bevor es durch eine der vertikal beabstandeten Öffnungen in das eigentliche Speichervolumen fließt. Auch dieser Speichereinsatz gibt Anlass zu Verbesserungen. So resultiert der relativ komplexe Aufbau in entsprechend hohen Herstellungskosten, ohne dass im Gegenzug eine optimale Wassereinschichtung gewährleistet werden kann.

Aus der DE 101 23 305 A1 ist weiterhin ein Warmwasserschichtenspeicher entsprechend dem Oberbegriff des Anspruchs 1 bekannt.

Es ist Aufgabe der vorliegenden Erfindung, einen Einsatz für einen Warmwasser-Schichtspeicher mit einem möglichst einfachen Aufbau vorzuschlagen, der dennoch die gewünschte verwirbelungsarme Wasserschichtung beim Be- und Entladen des Speichers ermöglicht.

Diese Aufgabe wird durch den Einsatz gemäß dem kennzeichnenden Merkmal des Anspruchs 1 gelöst.

Der erfindungsgemäße Einsatz weist eine im wesentlichen zylinderförmige Wandung mit zwei Stirnseiten auf. Über die erste Stirnseite ist der Einsatz, wie nachfolgend näher erläutert, mit dem Speichertank des Schichtspeichers verbunden. Die zweite, dieser Verbindung gegenüber liegende Stirnseite des Einsatzes ist mit einer Abdeckung versehen, so dass der Einsatz an seinen beiden Stirnseiten geschlossen ist. Selbstverständlich kann auch die dem Speicher zugewandte Seite mit einer entsprechenden Abdeckung versehen sein, falls die Befestigung des Einsatzes am Speicher ein derartiges Verschließen erfordert. Dies ist beispielsweise der Fall, wenn der Einsatz über seine erste Stirnseite lediglich durch Punktschweißen am Speichertank angeheftet ist.

Zusätzlich zur ersten Durchbrechung ist wenigstens eine weitere Durchbrechung innerhalb der Wandung angeordnet, wobei die weitere Durchbrechung ebenfalls mit wenigstens einem Zulauf- bzw. Ablaufrohr verbunden ist. Die mit Hilfe einer Heizung (Warmwasserboiler, Sonnenkollektoren, etc.) erwärmte Wassermenge strömt dabei über das Zulaufrohr durch die erste Durchbrechung in den Einsatz des Warmwasser-Schichtspeichers, welcher sich üblicherweise zwischen Heizung und Verbraucher befindet. Entspricht die von einem Verbraucher abgezogene Wassermenge dem von der Heizung zur Verfügung gestellten Wasservolumen, so verlässt im wesentlichen die gesamte Wassermenge, die von der Heizung über das Zulaufrohr in den Einsatz gelangt, diesen über das mit der zweiten Durchbrechung verbundene Ablaufrohr. Eine Zwischenspeicherung findet somit nicht statt und ist auch nicht nötig. Der erfindungsgemäße Einsatz für einen Warmwasser-Schichtspeicher ist dabei vorteilhafterweise im oberen Bereich des Speichers angeordnet, in dem aus physikalischen Gründen auch der wärmste Teil des Speicherwasser eingeschichtet ist.

Analog befindet sich vorteilhafterweise im unteren Bereich des Speichers, in dem sich das kühlere Wasser befindet, ein weiterer erfindungsgemäßer Einsatz, dessen Zulaufrohr in diesem Fall jedoch mit dem Verbraucher und dessen Ablaufrohr entsprechend mit der Heizung in Verbindung steht.

Im oben genannten Fall, in dem die von der Heizung bereitgestellte Wassermenge der vom Verbraucher benötigten Warmwassermenge entspricht, strömt das Wasser folglich von der Heizung über den oberen Einsatz des Warmwasser-Speichers zum Verbraucher. Von dort gelangt es schließlich über den unteren Einsatz wieder zurück zur Heizung. Der Warmwasser-Schichtspeicher ist in diesen Kreislauf zwar eingegliedert. Solange jedoch die durch den Einsatz zuströmende Wassermenge dem über den zweiten Einsatz abgezogenen Volumen entspricht, findet nahezu keine Vermischung des in den Rohren fließenden Wassers mit dem sich im Speichervolumen befindlichen Wasser statt.

Wird jedoch von der Heizung mehr Warmwasser zur Verfügung gestellt, als vom Verbraucher benötigt wird, beispielsweise, weil die Heizung zu Zeiten betrieben wird, in dem kein oder wenig Warmwasser benötigt wird, so liegt eine Differenz zwischen der in den Einsatz einströmenden und der daraus abgezogenen Wassermenge vor. Gleiches gilt für den Fall, dass der Bedarf des Verbrauchers die momentane Kapazität der Heizung übersteigt.

Für diese Fälle weist der Einsatz neben den Durchbrechungen zusätzliche Öffnungen innerhalb der Wandung auf, die für die Warmwasserschichtung sorgen, wie nachfolgend aufgeführt.

Übersteigt beispielsweise die von der Heizung zur Verfügung gestellte Warmwassermenge die vom Verbraucher benötigte Menge um den Faktor 2, so strömt die Hälfte der in den oberen Einsatz gelangenden Wassermenge durch das Ablaufrohr weiter zum Verbraucher. Die restliche Wassermenge tritt über die Öffnungen in den Innenraum des Warmwasser-Schichtspeichers. Im Gegenzug wird von der Heizung über den unteren Einsatz des Speichers das der zur Verfügung gestellten Wassermenge entsprechende Wasservolumen wieder abgezogen, um den Wasserstand in der Heizung konstant zu halten. Die dabei aus dem Warmwasser-Schichtspeicher abgezogene Wassermenge setzt sich dabei wiederum aus dem Volumen, das vom Verbraucher zurückfließt und der restlichen Menge zusammen, die dann über die Öffnungen des Einsatzes vom eigentlichen Speichervolumen entnommen wird. Somit bestehen in einem solchen Fall zwei untereinander verbundene Kreisläufe, nämlich Heizung -> oberer Einsatz -> Verbraucher -> unterer Einsatz -> Heizung sowie Heizung -> oberer Einsatz -> Speichervolumen -> unterer Einsatz -> Heizung.

Wird vom Verbraucher mehr Warmwasser benötigt, als von der Heizung zur Verfügung gestellt wird (oder werden kann), so setzt sich die vom Verbraucher abgezogene Wassermenge aus dem von der Heizung zur Verfügung gestellten Volumen, welches im wesentlichen durch den oberen Einsatz hindurchfließt und einer restlichen Wassermenge zusammen, die vom oberen Teil des Speichers durch die Öffnungen des Einsatzes abgezogen wird. Im Gegenzug wird wiederum ein abgekühlter Teilstrom vom Verbraucher direkt durch den Einsatz zur Heizung geleitet, wobei der andere abgekühlte Teil, welcher im wesentlichen der ursprünglich am oberen Einsatz abgezogenen Wassermenge entspricht, über die Öffnungen des unteren Einsatzes wiederum in den Speicher eingeschichtet wird.

Erfindungsgemäß weist das Verhältnis der Summe der Strömungsquerschnitte der Öffnungen zum Strömungsquerschnitt einer der wenigstens zwei Durchbrechungen bzw. des Zu- oder Ablaufes des Einsatzes einen Betrag zwischen 1,0 und 1,5 auf. Hierdurch wird eine besonders strömungsarme Zuführung bzw. Entnahme von Speicherwasser bewirkt, was eine hervorragende Energieeffizienz ermöglicht. Liegt das Verhältnis unter 1, so erhöht sich die Strömungsgeschwindigkeit des durch die Öffnungen ein- bzw. austretenden Wassers, wodurch auch die Verwirbelungen innerhalb und außerhalb des Einsatzes unvorteilhaft zunehmen. Weist das Verhältnis hingegen einen Betrag von mehr als 1,5 auf, so findet stets eine Vermischung des durch die Rohre fließenden Wassers mit dem eigentlichen Speicherwasser statt, auch wenn dies nicht erwünscht ist. Dies ist insbesondere der Fall, wenn der Wasserbedarf des Verbrauchers im wesentlichen der von der Heizung zur Verfügung gestellten Wassermenge entspricht und das Wasser somit lediglich auf möglichst kurzem Wege durch den Einsatz hindurchfließen soll.

Als vorteilhaft hat sich zudem herausgestellt, dass die Anzahl der Öffnungen, die wie nachfolgend genauer beschrieben in verschiedener Weise im Bereich der Einsatzwandung angeordnet sein können, einen Betrag zwischen 10 und 15, besonders vorteilhaft einen Betrag von 12 annimmt. Liegt die Anzahl außerhalb dieser Größenordnung, so können sich negative Einflüsse auf die Strömungsbedingungen innerhalb des Schichtspeichers bemerkbar machen.

Vorteilhafterweise kann zudem die Form der Durchbrechungen bzw. der Öffnungen entsprechend des Einsatzes und/oder der Geometrie des Warmwasserspeichers variiert werden. Neben einer kreisrunden Ausgestaltung haben sich besonders ovale, aber auch schlitzförmige oder rechteckige Formen bewährt.

Für eine möglichst strömungsberuhigte Zuführung bzw. Entnahme von Wasser aus dem Innenraum des Schichtspeichers ist es zudem besonders vorteilhaft, wenn der Einsatz im Bereich der Stirnseite des gewöhnlich zylinderförmig ausgebildeten Schichtspeichertanks angeordnet ist. Wird dem Speicher Warmwasser im Bereich der Oberseite des Speichers zugeführt, so wird dieses hierdurch besonders strömungsarm im oberen Bereich des Speichers eingeschichtet. Ebenso kann im Fall, dass der Verbraucher dem Speicher warmes Wasser entzieht, dieses direkt aus dem oberen Bereich des Tanks entzogen werden, in dem sich aus physikalischen Gründen das wärmste Speicherwasser befindet.

Ist auf der unteren Seite des Speichers ebenfalls ein Einsatz im Bereich der Stirnseite angeordnet, so wird vom Verbraucher zurückfließendes und somit abgekühltes Wasser in den Bereich des Tanks eingeschichtet, in dem sich der kühlste Bereich zwischengespeicherten Wassers befindet. Wird von der Heizung mehr Wasser benötigt, als vom Verbraucher zurückfließt, so wird dieses wiederum in zweckmäßiger Weise dem kältesten Bereich des Speichers entnommen. Durch diese erfindungsgemäße Anordnung der Einsätze wird in einfacher Weise eine annähernd verwirbelungsfreie Zuführung bzw. Entnahme von Speicherwasser realisiert.

Das Zu- bzw. Ablaufrohr ist in einer vorteilhaften Ausgestaltung mit dem Einsatz verschraubt oder verschweißt, was eine besonders kostengünstige Alternative darstellt. Selbstverständlich kann der Einsatz auch mit zusätzlichen Zu- bzw. Ablaufrohren verbunden werden, falls der Warmwasser-Schichtspeicher mit mehreren Heizungen und/oder Verbrauchern verbunden ist.

Darüber hinaus sind die Zu- bzw. Ablaufrohre vorteilhafterweise in einem Winkel zwischen 60° und 120°, besonders vorteilhaft in einem Winkel von 90° zueinander angeordnet. Hierdurch sind die Rohre nach Aufstellen des Schichtspeichers jederzeit leicht zugänglich, auch wenn dieser, wie üblich, in der Ecke eines Raumes aufgestellt wird. Zudem wird durch den vorgeschlagenen Winkelbereich eine zusätzliche Strömungsberuhigung innerhalb des Einsatzes bewirkt.

Besonders vorteilhart ist es zudem, wenn die Öffnungen zwischen den Durchbrechungen und der mit dem Warmwasser-Schichtspeicher in Verbindung stehenden Kante der Stirnseite des Einsatzes angeordnet sind. Hierdurch erfolgt in einfacher Weise eine Beschickung bzw. Entnahme des Speicherwassers in den Bereichen des Speichers, der die höchste bzw. niedrigste Temperatur aufweist, wodurch ebenfalls Verwirbelungen so gering wie möglich gehalten werden können. Dies trägt weiter zu einer Maximierung der Energieeffizienz bei.

Sind die Öffnungen des Einsatzes zudem im Bereich einer der Stirnseiten des Einsatzes angeordnet, so müssen diese nicht aus der Wandung gebohrt bzw. gestanzt werden, sondern können alternativ aus der Wandung herausgefräst oder gesägt werden.

Vorteilhaft ist es ebenso, wenn die Öffnungen in gleichem Abstand zueinander über die Wandung verteilt sind, da hierdurch im Fall einer Wasserentnahme bzw. -beschickung Verwirbelungen innerhalb des Einsatzes weiter minimiert werden können.

In Abhängigkeit der Speichergeometrie oder der Strömungsgeschwindigkeiten des Wassers innerhalb der Zu- und Ablaufrohre kann es aber auch vorteilhaft sein, dass zumindest ein Teil der Öffnungen zwischen den Durchbrechungen angeordnet ist. Die Verteilung kann dabei individuell auf verschiedene Schichtspeicherarten angepasst werden, so dass der erfindungsgemäße Einsatz universell einsetzbar ist. Zudem macht diese Anordnung eine sehr flache Bauweise des Einsatzes möglich, welcher hierdurch nicht wesentlich höher als die Durchmesser der Durchbrechungen sein muss.

Um die Strömungsverhältnisse innerhalb des Einsatzes und damit indirekt auch innerhalb des Warmwasser-Schichtspeichers zu optimieren, sind verschiedene vorteilhafte Anordnungen der Zu- und Ablaufrohre zueinander oder bezüglich der Dreh- bzw. Symmetrieachse des Einsatzes denkbar. So kann es von Vorteil sein, wenn sich die Dreh- bzw. Symmetrieachse der Zu- bzw. Ablaufrohre und die Dreh- bzw. Symmetrieachse des Einsatzes in einem Winkel ungleich 90° schneiden. Auch kann in manchen Fällen eine windschiefe Lage der Zu- bzw. Ablaufrohre bezüglich der Dreh- bzw. Symmetrieachse des Einsatzes und/oder zueinander günstig sein. Hier ist die Erfindung nicht auf bestimmte Winkel beschränkt. Vielmehr müssen diese in Abhängigkeit von der genauen Größe und/oder Geometrie des Speichers und des Einsatzes gewählt werden.

Ragen die Zu- bzw. Ablaufrohre durch die Durchbrechungen in den Einsatz hinein, so wird eine rechtwinklige Strömungsabrisskante vermieden, die sich negativ auf die Strömungsverhältnisse auswirken könnte.

In einer besonders vorteilhaften Ausgestaltung des Einsatzes sind den Durchbrechungen und/oder den Öffnungen auf der Innen- und/oder Außenseite der Wandung Leitbleche zugeordnet. Diese bewirken in einfacher Weise eine Beruhigung der Wasserströmung, wobei beachtet werden sollte, dass die Strömung von Einlaufrohr zu Auslaufrohr nicht übermäßig behindert wird.

Im folgenden wird die Erfindung anhand von Figuren erläutert. Es zeigen:
- **Figur 1**: eine schematische Schnittdarstellung eines Warmwasser-Schichtspeichers mit zwei unterschiedlichen erfindungsgemäßen Einsätzen;
- **Figur 2a), b)**: eine seitliche Ansicht sowie eine Draufsicht eines erfindungsgemäßen Einsatzes für einen Warmwasser-Schichtspeicher, und
- **Figur 3**: eine schematische Seitenansicht eines Warmwasser-Schichtspeichers, verbunden mit einer Heizung (H) und einem Verbraucher (V).

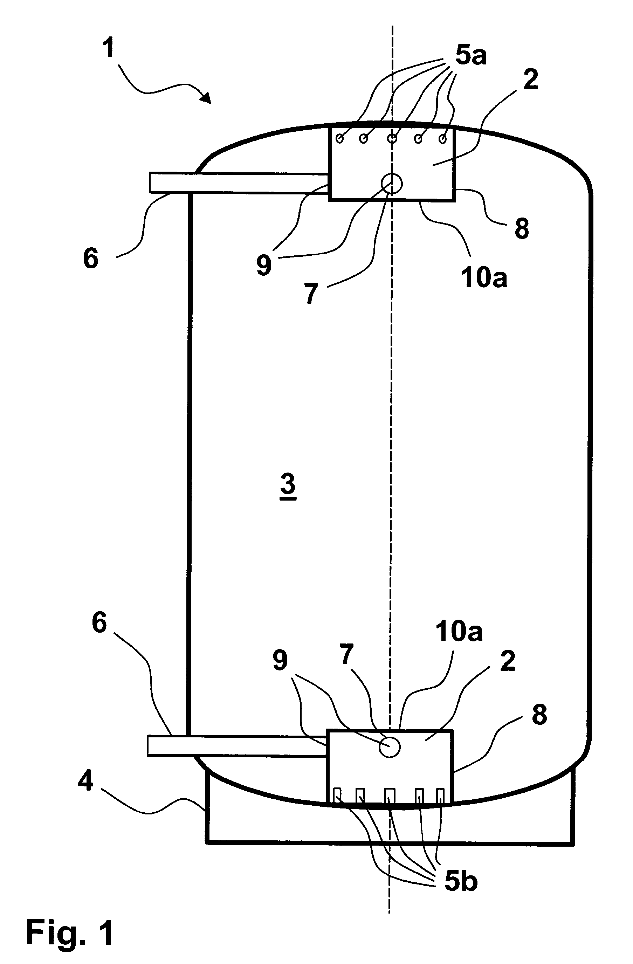

In Figur 1 ist eine schematische Schnittdarstellung eines Warmwasser-Schichtspeichers 1 mit zwei Einsätzen 2 dargestellt. Der Speicher 1 besteht hierbei aus einem Speichertank 3 und einem Sockel 4. Im Inneren des Speichertanks 3 befinden sich zwei erfindungsgemäße Einsätze 2, die jeweils an einer der beiden Stirnseiten des Speichertanks 3 angeordnet, vorzugsweise angeschweißt sind. Während der obere Einsatz 2 kreisrunde Öffnungen 5a zur Gewährleistung eines Druckausgleichs zwischen Innenraum des Speichertanks 3 und Innenraum des Einsatzes 2 beim Befüllen oder Entleeren des Warmwasser-Schichtspeichers 1 über das Zulauf- 6 bzw. Ablaufrohr 7 aufweist, zeigt der untere Einsatz 2 rechtwinklige Öffnungen 5b, die zudem im Bereich der Stirnseite des Einsatzes 2 angeordnet sind.

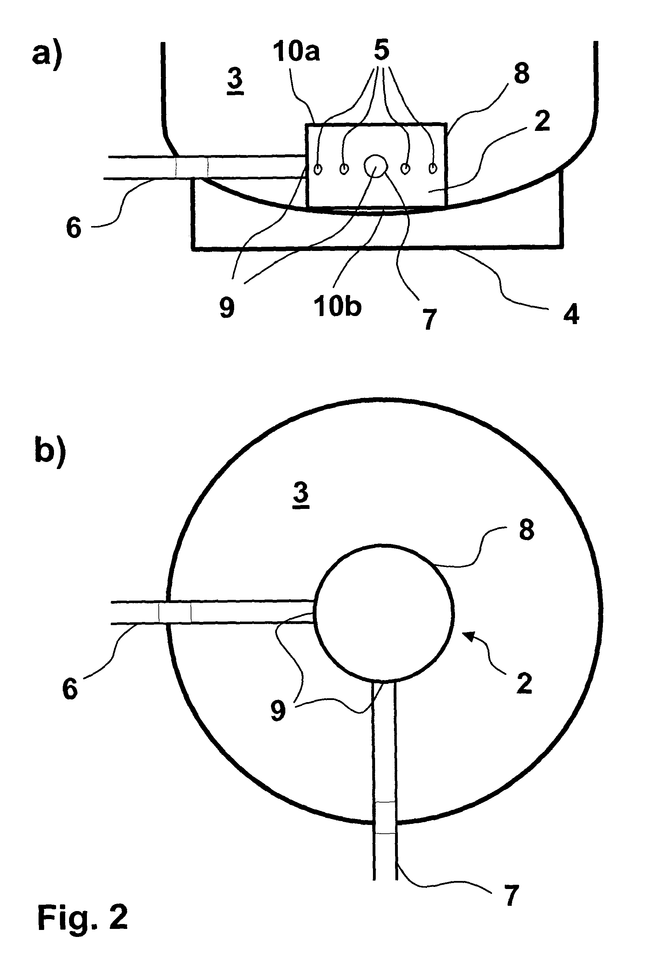

Der Einsatz 2 selbst besteht gemäß Figur 2 aus einer zylindrischen Wandung 8, welche wenigstens zwei Durchbrechungen 9 aufweiset, die wiederum mit wenigstens je einem Zulauf- 6 bzw. Ablaufrohr 7 verbunden sind. Günstigerweise sind die Rohre dabei in einem Winkel von 90° zueinander angeordnet, wobei auch andere Winkel ausdrücklich nicht ausgeschlossen sind. Die Öffnungen 5 befinden sich bei der Ausführungsform gemäß der Figur 2 zwischen den Durchbrechungen 9. Die Anzahl der Öffnungen sollte zwischen 10 und 15, vorzugsweise 12 betragen, da dieser Bereich besonders zuverlässige Strömungsverhältnisse garantiert.

Zudem hat sich herausgestellt, dass das Verhältnis der Summe der Strömungsquerschnitte der Öffnungen 5 zum Strömungsquerschnitt einer der wenigstens zwei Durchbrechungen 9 mit einem Wert zwischen 1,0 und 1,5 einen besonders vorteilhaften Betrag aufweist.

Um den Einsatz im Bereich seiner Stirnseiten zu verschließen, ist dieser vorzugsweise mit beidseitig angeordneten Abdeckungen 10a und 10b versehen. Durch das Verschließen der Stirnseiten des Einsatzes wird gewährleistet, dass das Wasser ausschließlich in kontrollierter Weise durch die Öffnungen bzw. Durchbrechungen in den Einsatz einströmt oder diesen verlässt. Ist die eine Stirnseite des Einsatzes 2 mit der Stirnseite des Speichertanks 3 mittels einer geschlossenen Schweißnaht oder einer vergleichbaren wasserdichten Verbindung verbunden, so genügt lediglich eine Abdeckung 10a zum Verschließen des Einsatzes auf dessen der Verbindung abgewandten Stirnseite.

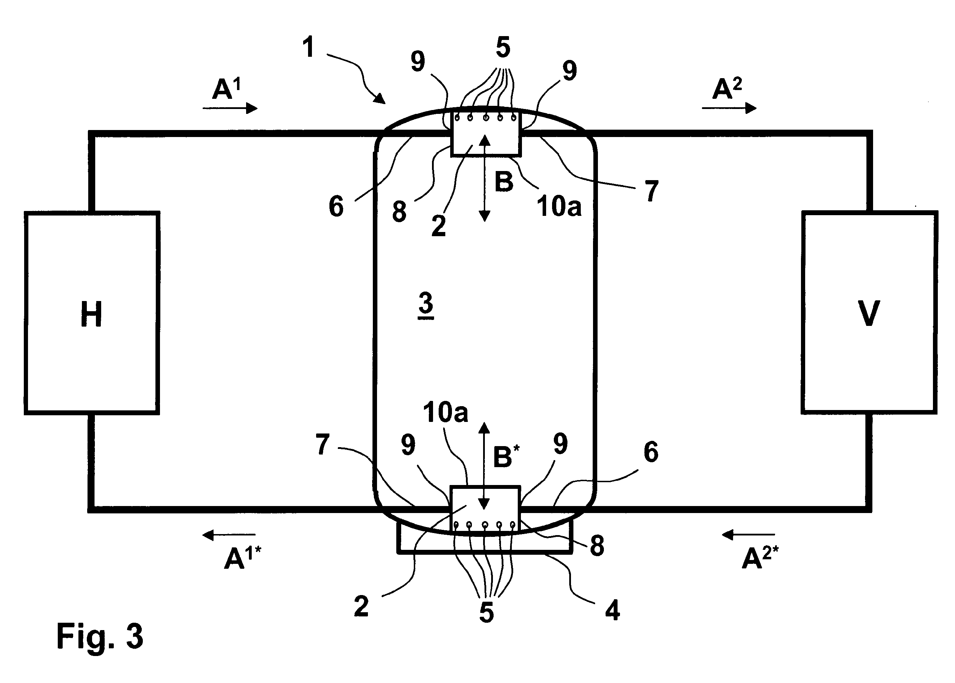

Figur 3 zeigt die Einbindung des Warmwasser-Schichtspeichers 1 zwischen einer Heizung (H) und einem Verbraucher (V) in einem Wasserkreislauf. Selbstverständlich kann der Speicher 1 über den Einsatz 2 auch mit mehreren Heizung (H) - beispielsweise einer Gasheizung und einem Sonnenkollektor - in Verbindung stehen. Auch ist lediglich aus Gründen der Übersichtlichkeit nur ein Verbraucher (V) dargestellt.

Das mit Hilfe der Heizung (H) erwärmte Wasser A¹ strömt bei Betrieb der Heizung (H) über das Zulaufrohr 6 durch die erste Durchbrechung 9 in den oberen Einsatz 2 des Warmwasser-Schichtspeichers 1. Auf der anderen Seite wird vom Verbraucher (V) eine gewisse Menge Wasser A² benötigt. Entspricht A¹ der Menge A², so fließt das Wasser ohne nennenswerte Vermischung mit dem Inhalt des Speichertanks 3 über die zweite Durchbrechung 9 durch den Einsatz 2 hindurch. Entsprechend wird das Wasser nach Passieren des Verbrauchers (V) wieder zur Heizung (H), dann über die Durchbrechungen 9 des unteren Einsatzes 2 des Speichers 1, zurückgeführt. In diesem Fall gilt A¹=A²=A²*=A¹*.

Wird jedoch von der Heizung (H) mehr Warmwasser zur Verfügung gestellt, als vom Verbraucher (V) benötigt wird, teilt sich der Wasserstrom A¹ innerhalb des oberen Einsatzes 2 in die Teile A², der zum Verbraucher (V) weiterfließt und den verbleibenden Teil B auf, welcher über die Öffnungen 5 in den Speichertank 3 des Warmwasser-Schichtspeichers 1 gelangt. Da die Menge A¹* der von der Heizung (H) zur Verfügung gestellten Menge A¹ entsprechen muss, entzieht die Heizung (H) über den unteren Einsatz 2 entsprechend die Anfangswassermenge A¹. Diese setzt sich wiederum zusammen aus dem vom Verbraucher (V) über die Durchbrechungen 9 des Einsatzes 2 zurückfließenden Wasserstrom A²* und dem über die Öffnungen 5 in den Einsatz 2 gelangenden Teilstrom B*, der dem Speichertank 3 entzogen wird.

Wird vom Verbraucher (V) mehr Warmwasser benötigt, als von der Heizung (H) zur Verfügung gestellt wird oder werden kann, so setzt sich die vom Verbraucher (V) abgezogene Wassermenge A² aus dem von der Heizung (H) zur Verfügung gestellten Teilstrom A¹, welcher im wesentlichen durch den oberen Einsatz 2 hindurchfließt, und der restlichen Wassermenge B zusammen, die aus dem Speichertank 3 durch die Öffnungen 5 mittels des Ablaufrohrs 7abgezogen wird. Entsprechend setzt sich auch der Wasserstrom A¹*, der zur Heizung (H) zurückfließt, aus einem abgekühlten Teilstrom A²*, der vom Verbraucher (V) durch den Einsatz 2 zurück zur Heizung (H) fließt und einen Teilstrom B* zusammen, der am unteren Teil des Speichertanks 3 durch die Öffnungen 5 in den Einsatz 2 und von dort über das Ablaufrohr 7 zur Heizung (H) gelangt.

Die vorliegende Erfindung wurde anhand eines Ausführungsbeispiels näher erläutert. Sie ist jedoch nicht auf das dargestellte und beschriebene Beispiel beschränkt. Es sind Abwandlungen im Rahmen der Schutzansprüche jederzeit möglich.

## Patentansprüche

1. Einsatz (2) für einen Warmwasser-Schichtspeicher (1), mit einer im wesentlichen zylinderförmigen Wandung (8), mit wenigstens einer stirnseitigen Abdeckung (10), mit einer Durchbrechung (9) innerhalb der Wandung (8), wobei die Durchbrechung (9) mit wenigstens einem Zulauf-(6) bzw. Ablaufrohr (7) verbunden ist, mit Öffnungen (5) innerhalb der Wandung (8), die beim Befüllen oder Entleeren des Warmwasser-Schichtspeichers (1) über das Zulauf- (6) bzw. Ablaufrohr (7) einen Druckausgleich zwischen Innenraum des Warmwasser-Schichtspeichers (1) und Innenraum des Einsatzes (2) gewährleisten, und mit wenigstens einer weiteren Durchbrechung (9) innerhalb der Wandung (8), wobei die weitere Durchbrechung (9) ebenfalls mit wenigstens einem Zulauf- (6) bzw. Ablaufrohr (7) verbunden ist, **dadurch gekennzeichnet, dass** das Verhältnis der Summe der Strömungsquerschnitte der Öffnungen (5) zum Strömungsquerschnitt einer der wenigstens zwei Durchbrechungen (9) einen Betrag zwischen 1,0 und 1,5 aufweist.

2. Einsatz (2) nach Anspruch 1, **dadurch gekennzeichnet, dass** die Anzahl der Öffnungen (5) zwischen 10 und 15, vorzugsweise 12 beträgt.

3. Einsatz (2) nach einem oder mehreren der vorangegangenen Ansprüche, **dadurch gekennzeichnet, dass** die Durchbrechungen (9) und/oder Öffnungen (5) im wesentlichen kreisrunde, ovale, rechteckige und/oder schlitzförmige Querschnitte aufweisen.

4. Einsatz (2) nach einem oder mehreren der vorangegangenen Ansprüche, **dadurch gekennzeichnet, dass** der Einsatz (2) an einer Stirnseite eines Warmwasser-Schichtspeichers (1) angeordnet, insbesondere angeschweißt ist.

5. Einsatz (2) nach einem oder mehreren der vorangegangenen Ansprüche, **dadurch gekennzeichnet, dass** die Zulauf- (6) bzw. Ablaufrohre (7) mit dem Einsatz (2) verschraubt oder verschweißt sind.

6. Einsatz (2) nach einem oder mehreren der vorangegangenen Ansprüche, **dadurch gekennzeichnet, dass** die Zulauf- (6) bzw. Ablaufrohre (7) in einem Winkel zwischen 60° und 120°, vorzugsweise in einem Winkel von 90° zueinander angeordnet sind.

7. Einsatz (2) nach einem oder mehreren der vorangegangenen Ansprüche, **dadurch gekennzeichnet, dass** die Öffnungen (5) zwischen den Durchbrechungen (9) und der mit dem Warmwasser-Schichtspeicher (1) in Verbindung stehenden Kante der Stirnseite des Einsatzes (2) angeordnet sind.

8. Einsatz (2) nach einem oder mehreren der vorangegangenen Ansprüche, **dadurch gekennzeichnet, dass** die Öffnungen (5) im Bereich einer der Stirnseiten des Einsatzes (2) angeordnet sind.

9. Einsatz (2) nach einem oder mehreren der vorangegangenen Ansprüche, **dadurch gekennzeichnet, dass** die Öffnungen (5) in gleichem Abstand zueinander über die Wandung (8) verteilt sind.

10. Einsatz (2) nach einem oder mehreren der vorangegangenen Ansprüche, **dadurch gekennzeichnet, dass** zumindest ein Teil der Öffnungen (5) zwischen den Durchbrechungen (9) angeordnet ist.

11. Einsatz (2) nach einem oder mehreren der vorangegangenen Ansprüche, **dadurch gekennzeichnet, dass** die Zulauf- (6) bzw. Ablaufrohre (7) in einem Winkel von 90° bezüglich der Dreh- bzw. Symmetrieachse des Einsatzes (2) angeordnet sind.

12. Einsatz (2) nach einem oder mehreren der vorangegangenen Ansprüche, **dadurch gekennzeichnet, dass** sich die Dreh- bzw. Symmetrieachse der Zulauf- (6) bzw. Ablaufrohre (7) und die Dreh- bzw. Symmetrieachse des Einsatzes (2) in einem Winkel ungleich 90° schneiden.

13. Einsatz (2) nach einem oder mehreren der vorangegangenen Ansprüche, **dadurch gekennzeichnet, dass** die Zulauf- (6) bzw. Ablaufrohre (7) windschief bezüglich der Dreh- bzw. Symmetrieachse des Einsatzes (2) und/oder zueinander angeordnet sind.

14. Einsatz (2) nach einem oder mehreren der vorangegangenen Ansprüche, **dadurch gekennzeichnet, dass** die Zulauf- (6) bzw. Ablaufrohre (7) durch die Durchbrechungen (9) in den Einsatz (2) hineinragen.

15. Einsatz (2) nach einem oder mehreren der vorangegangenen Ansprüche, **dadurch gekennzeichnet, dass** den Durchbrechungen (9) und/oder den Öffnungen (5) auf der Innen- und/oder Außenseite der Wandung (8) Leitbleche zur Beruhigung der Wasserströmung zugeordnet sind.

16. Warmwasser-Schichtspeicher (1) mit wenigstens einem Einsatz (2) gemäß einem der Ansprüche 1 bis 15.

## Claims

1. An insert (2) for a stratified hot water storage tank (1), having a substantially cylindrical wall (8), having at least one end face cover (10), having a penetration (9) within the wall (8), the penetration being connected to at least one inlet (6) or outlet pipe (7), having openings (5) within the wall (8) ensuring pressure compensation between the interior of the stratified hot water storage tank (1) and the interior of the insert (2) during filling or emptying of the stratified hot water storage tank (1) via the inlet (6) or outlet (7) pipe, and having at least one further penetration (9) within the wall (8), the further penetration (9) also being connected to at least one inlet (6) or outlet pipe (7), **characterized in that** the ratio of the sum of the flow cross sections of the openings (5) to the flow cross section of one of the at least two penetrations (9) has a value between 1.0 and 1.5.

2. The insert (2) according to claim 1, **characterized in that** the number of openings (5) is between 10 and 15, preferably 12.

3. The insert (2) according to one or more of the preceding claims, **characterized in that** the penetrations (9) and/or openings (5) are substantially circular, oval, rectangular, and/or slot-shaped in cross section.

4. The insert (2) according to one or more of the preceding claims, **characterized in that** the insert (2) is disposed, particularly welded, at an end face of a stratified hot water storage tank (1).

5. The insert (2) according to one or more of the preceding claims, **characterized in that** the inlet (6) or outlet pipes (7) are screwed or welded to the insert (2).

6. The insert (2) according to one or more of the preceding claims, **characterized in that** the inlet (6) or outlet pipes (7) are disposed at an angle between 60° and 120°, preferably at an angle of 90° relative to each other.

7. The insert (2) according to one or more of the preceding claims, **characterized in that** the openings (5) are disposed between the penetrations (9) and the edge of the end face of the insert (2) connected to the stratified hot water storage tank (1).

8. The insert (2) according to one or more of the preceding claims, **characterized in that** the openings (5) are disposed in the region of one of the end faces of the insert (2).

9. The insert (2) according to one or more of the preceding claims, **characterized in that** the openings (5) are distributed at equal distances from each other along the wall (8).

10. The insert (2) according to one or more of the preceding claims, **characterized in that** at least a portion of the openings (5) is disposed between the penetrations (9).

11. The insert (2) according to one or more of the preceding claims, **characterized in that** the inlet (6) or outlet pipes (7) are disposed at an angle of 90° relative to the axis of rotation or symmetry of the insert (2).

12. The insert (2) according to one or more of the preceding claims, **characterized in that** the axis of rotation or symmetry of the inlet (6) or outlet pipes (7) and the axis of rotation or symmetry of the insert (2) intersect at an angle not equal to 90°.

13. The insert (2) according to one or more of the preceding claims, **characterized in that** the inlet (6) or outlet pipes (7) are disposed skewed to the axis of rotation or symmetry of the insert (2) and/or to each other.

14. The insert (2) according to one or more of the preceding claims, **characterized in that** the inlet (6) or outlet pipes (7) protrude through the penetrations (9) into the insert (2).

15. The insert (2) according to one or more of the preceding claims, **characterized in that** guide vanes for calming the water flow are associated with the penetrations (9) and/or the openings (5) on the inner and/or outer side of the wall (8).

16. A stratified hot water storage tank (1) having at least one insert (2) according to one of the claims 1 through 15.

## Revendications

1. Insert (2) pour un accumulateur d'eau chaude à stratification (1), avec une paroi (8) essentiellement cylindrique, avec au moins un revêtement (10) à la face, avec une perforation (9) au sein de la paroi (8), sachant que la perforation (9) est reliée à au moins un tube d'admission (6) ou un tube de décharge (7), avec des ouvertures (5) au sein de la paroi (8), lesquelles assurent la compensation de pression entre l'espace intérieur de l'accumulateur d'eau chaude à stratification (1) et l'espace intérieur de l'insert (2) lors du remplissage ou du vidage de l'accumulateur d'eau chaude à stratification (1) via le tube d'admission (6) ou le tube de décharge (7), et avec au moins une perforation supplémentaire (9) au sein de la paroi (8), sachant que la perforation supplémentaire (9) est également reliée à au moins un tube d'admission (6) ou un tube de décharge (7), **caractérisé en ce que** le rapport de la somme des sections de passage des ouvertures (5) et de la section de passage de l'une des au moins deux perforations (9) représente un chiffre compris entre 1,0 et 1,5.

2. Insert (2) selon la revendication 1, **caractérisé en ce que** le nombre d'ouvertures (5) s'élève à une valeur entre 10 et 15, de préférence égale à 12.

3. Insert (2) selon l'une quelconque ou plusieurs des revendications précédentes, **caractérisé en ce que** les perforations (9) et/ou les ouvertures (5) présentent des sections essentiellement circulaires, ovales, rectangulaires et/ou en forme de rainure.

4. Insert (2) selon l'une quelconque ou plusieurs des revendications précédentes, **caractérisé en ce que** l'insert (2) est disposé, en particulier soudé, à une face frontale d'un accumulateur d'eau chaude à stratification (1).

5. Insert (2) selon l'une quelconque ou plusieurs des revendications précédentes, **caractérisé en ce que** les tubes d'admission (6) ou de décharge (7) sont vissés ou soudés à l'insert (2).

6. Insert (2) selon l'une quelconque ou plusieurs des revendications précédentes, **caractérisé en ce que** les tubes d'admission (6) ou de décharge (7) sont disposés les uns par rapport aux autres à un angle compris entre 60° et 120°, de préférence de 90°.

7. Insert (2) selon l'une quelconque ou plusieurs des revendications précédentes, **caractérisé en ce que** les ouvertures (5) sont disposées entre les perforations (9) et le bord de la face frontale de l'insert (2) en relation avec l'accumulateur d'eau chaude à stratification (1).

8. Insert (2) selon l'une quelconque ou plusieurs des revendications précédentes, **caractérisé en ce que** les ouvertures (5) sont disposées dans la zone de l'une des faces frontales de l'insert (2).

9. Insert (2) selon l'une quelconque ou plusieurs des revendications précédentes, **caractérisé en ce que** les ouvertures (5) sont réparties sur la paroi (8) à une distance égale les unes des autres.

10. Insert (2) selon l'une quelconque ou plusieurs des revendications précédentes, **caractérisé en ce qu'**une partie au moins des ouvertures (5) est disposée entre les perforations (9).

11. Insert (2) selon l'une quelconque ou plusieurs des revendications précédentes, **caractérisé en ce que** les tubes d'admission (6) ou de décharge (7) sont disposés à un angle de 90° par rapport à l'axe de rotation ou de symétrie de l'insert (2).

12. Insert (2) selon l'une quelconque ou plusieurs des revendications précédentes, **caractérisé en ce que** l'axe de rotation ou de symétrie des tubes d'admission (6) ou de décharge (7) et l'axe de rotation ou de symétrie de l'insert (2) se coupent à un angle différent de 90°.

13. Insert (2) selon l'une quelconque ou plusieurs des revendications précédentes, **caractérisé en ce que** les tubes d'admission (6) ou de décharge (7) sont disposés à une position déversée par rapport à l'axe de rotation ou de symétrie de l'insert (2) et/ou les uns par rapport aux autres.

14. Insert (2) selon l'une quelconque ou plusieurs des revendications précédentes, **caractérisé en ce que** les tubes d'admission (6) ou de décharge (7) se prolongent dans l'insert (2) à travers les perforations (9).

15. Insert (2) selon l'une quelconque ou plusieurs des revendications précédentes, **caractérisé en ce que** des tôles de guidage sont attribuées aux perforations (9) et/ou aux ouvertures (5) sur la face intérieure et/ou extérieure de la paroi (8) pour tranquilliser le courant d'eau.

16. Accumulateur d'eau chaude à stratification (1) avec au moins un insert (2) selon l'une quelconque des revendications 1 à 15.
